# EUROPÄISCHE PATENTANMELDUNG

(11) **EP 4 342 742 A1**
(43) Veröffentlichungstag der Anmeldung: **27.03.2024**
(21) Anmeldenummer: 23196711.8
(22) Anmeldetag: 12.09.2023
(51) Int. Cl.: B60R 21/264

(54) **GASGENERATOR**

(30) Priorität: 20.09.2022 DE 102022124029
(71) Anmelder: ZF Airbag Germany GmbH, 84544 Aschau a. Inn (DE)
(72) Erfinder: Mehnert, Bernhard, 85560 Ebersberg (DE); Bierwirth, Sebastian, 83562 Rechtmehring (DE); Englbrecht, Karl, 84513 Erharting (DE); Ebner, Johannes, 84453 Mühldorf am Inn (DE); Kolbin, Vadim, 85540 Haar (DE)
(74) Vertreter: ZF Patentabteilung - DIPS

(57) **Zusammenfassung**

Ein Gasgenerator (10) umfasst ein Gehäuse (12), in dem ein konisches Brennkammersieb (52) die Brennkammer (44) abschließt. Stirnseitig wird das Brennkammersieb (52) durch eine Endkappe (54) geschlossen, an die sich ein Filterelement (60) anschließt, welches randseitig des Filterbodens (62) ein oder mehrere axial abstehende Zentrierfortsätze (64) besitzt.

## Beschreibung

Die Erfindung betrifft einen Gasgenerator.

Solche Gasgeneratoren werden insbesondere für Fahrzeugsicherheitssysteme eingesetzt, wobei ihre Verwendung nicht darauf beschränkt ist.

Es ist bekannt, dass Gasgeneratoren Brennkammersiebe aufweisen. Diese dienen insbesondere zum Zurückhalten von Schlacke oder Treibstoffpartikeln, welche bei Aktivierung des Gasgenerators gebildet werden und in einem innerhalb des Gehäuses des Gasgenerators ausgebildeten Gasstrom von Abbrandgas transportiert werden können. Brennkammersiebe des Standes der Technik können jedoch ungleichmäßig durchströmt werden, so dass eine ungleichmäßige Filterwirkung beim Zurückhalten von Schlacke oder Treibstoffpartikeln auftreten kann.

Die DE 10 2016 123 312 A1 schlägt deshalb vor, das Brennkammersieb als konusförmiges Teil auszuführen, das sich zum diffusorseitigen Ende verjüngt. Damit ergibt sich ein Ringraum zwischen der Innenseite einer Gehäusewand und der Außenseite des Brennkammersiebs, über das das gefilterte Abbrandgas in Richtung Diffusor strömt. Dadurch, dass das Brennkammersieb an entgegengesetzten axialen Enden, d.h. stirnseitig offen ist, muss zur Durchströmung eine das diffusorseitige Ende schließende Endkappe vorhanden sein. Diese Endkappe hat im Stand der Technik einen vom Boden abstehenden Umfangsrand mit radial nach außen abgewinkelten Laschen, die zur Zentrierung der Endkappe und des Brennkammersiebs, welches in die Endkappe hineinragt, dienen.

Aufgabe der Erfindung ist es, diesen bekannten Gasgenerator noch einfacher und strömungsmäßig optimierter zu gestalten.

Dies wird durch einen Gasgenerator erreicht, der ein Gehäuse, eine Anzündeinheit mit einem Anzünder, eine mit pyrotechnischem Treibstoff gefüllte Brennkammer, einen der Brennkammer nachgelagerten Diffusor mit zumindest einer Ausströmöffnung, ein in der Brennkammer an deren diffusorseitigem Ende vorgesehenes Brennkammersieb, welches ein diffusorseitiges Ende und ein anzünderseitiges, axial entgegengesetztes Ende hat und vom anzünderseitigen Ende aus zum diffusorseitigen Ende verjüngend, insbesondere konisch, zuläuft, wobei die zwei entgegensetzten Enden offen sind, wobei das diffusorseitige Ende des Brennkammersiebs seitlich von einer Gehäusewand unter Bildung eines insbesondere treibstofffreien Ringraums beabstandet ist, eine sich stirnseitig an das diffusorseitige Ende des Brennkammersiebs anschließende und das diffusorseitige Ende des Brennkammersiebs schließende Endkappe, welche einen Boden und einen vom Boden abstehenden Umfangsrand hat, welcher außenseitig des Diffusors angeordnet ist, ein topfförmiges Filterelement mit einem Filterboden und zumindest einem randseitig des Filterbodens axial abstehenden Zentrierfortsatz, mit dem das Filterelement in dem Gehäuse zentriert ist.

Der erfindungsgemäße Gasgenerator nutzt das Filterelement zur Zentrierung, indem dieses zumindest einen axial abstehenden Zentrierfortsatz aufweist. Die bisherigen Filterelemente waren reine Scheiben. Damit können die Laschen an der Endkappe entfallen. Diese ist somit deutlich einfacher herzustellen, und zudem gibt es keine Laschen, die die Strömungsführung beeinträchtigen.

Der Gasgenerator kann auch noch ein Stützteil umfassen, an welchem der Filterboden anliegt und welches das Filterelement, die Endkappe und den Diffusor in Ausströmrichtung abstützt.

Das Gehäuse kann zum Diffusor hin einen Absatz haben, insbesondere in Form einer zum Beispiel konusförmigen Verjüngung. An diesem Absatz liegt das Stützteil an. Somit sind keine weiteren Befestigungsteile für das Stützteil notwendig.

Zwischen dem Stützteil und der Verjüngung bildet sich eine Zwischenkammer, über die das gefilterte Abbrandgas zum Diffusor gelangt

Das Stützteil ist insbesondere eine mit Durchströmöffnungen versehene Scheibe aus Metall, deren Biegesteifigkeit größer ist als die der Endkappe und des Filterelements. Die Endkappe und das Filterelement können sich somit nicht beim Abbrennen des pyrotechnischen Treibstoffs aufgrund des auftretenden Drucks und der auftretenden Strömung so stark durchbiegen, dass sie in die Zwischenkammer hin ausbauchen. Damit bleiben die Wege für das gefilterte Abbrandgas vorbestimmbar und ausreichend groß im Querschnitt.

Eine Variante der Erfindung sieht vor, dass das Gehäuse durch eine axial von dem Stützteil beabstandete Berstmembrane geschlossen ist. Der Diffusor kann damit als separates Teil, ähnlich einer Kappe, am Gehäuse angebracht sein.

Die Berstmembrane ist entweder am Gehäuse selbst befestigt oder an einem Membranhalter. Dieser Membranhalter ist beispielsweise eine Art Hülse, welche in eine stirnseitige Öffnung des Gehäuses eingesteckt und darin befestigt ist. Die zentrische Öffnung dieser Hülse wird durch die Berstmembrane geschlossen.

Das Stützteil liegt insbesondere seitlich an dem Gehäuse an, um im Gehäuse zentriert zu sein.

In der Brennkammer sind gemäß einer Variante der Erfindung Treibstoffpellets angeordnet sowie eine mechanische Vorspannvorrichtung. Diese Vorspannvorrichtung dient dazu, die Treibstoffpellets in Richtung Diffusor vorzuspannen, so dass sich diese während eines Fahrtbetriebs über viele Jahre hinweg nicht relativ zueinander bewegen und gegeneinander reiben können. Durch die Vorspannvorrichtung wird auch die Dichte der Treibstoffladung erhöht.

Wenn die Vorspannvorrichtung eine sich quer zur Längserstreckung der Brennkammer erstreckende, in der Brennkammer verschiebliche Scheibe sowie eine die Scheibe vorspannende Schraubenfeder umfasst, lässt sie sich sehr einfach und kostengünstig ausführen. Die Scheibe ist mit zahlreichen Öffnungen versehen, um von dem Anzünder eingebrachtes heißes Gas und heiße Partikel zu dem pyrotechnischen Treibstoff gelangen zu lassen.

Es hat sich herausgestellt, dass eine Schraubenfeder mit einer Doppelkegelform, das heißt, mit einem verjüngten Mittelabschnitt (Mittelabschnitt bezogen auf die Axialerstreckung), eine sehr vorteilhafte Federkennlinie für die vorgenannten Zwecke aufweist.

Die Schraubenfeder kann axial beabstandet vom anzünderseitigen Ende des Gehäuses bleiben und axial durch eine radiale Presspassung in diesem Bereich am Gehäuse gehalten sein. Das bedeutet, die Schraubenfeder stützt sich nicht axial an ihrem der Scheibe entgegengesetzten Ende am Gehäuse oder einer Stirnwand oder der Anzündeinheit ab, sondern ist rein durch eine Presspassung im Gehäuse gesichert. Dies vereinfacht die Einbringung der Anzündeinheit, insbesondere wenn diese als Stirnwand mit einer ins Innere des Gehäuses ragenden Ausbuchtung zur Unterbringung des Anzünders ausgeführt ist. Dann hat nämlich das Einschieben der Anzündeinheit in das Gehäuse keinen Einfluss auf die Schraubenfeder.

Der Gasgenerator ist insbesondere ein Rohrgasgenerator, mit einem zylindrischen, langgestreckten Gehäuse. An einem axialen Ende des Gehäuses ist die Anzündeinheit vorgesehen und am entgegengesetzten Ende der Diffusor. Das Gehäuse ist insbesondere kreiszylindrisch und im Bereich der Brennkammer, vorzugsweise bis zur Anzündeinheit, mit gleichem Querschnitt versehen.

Das Filterelement lässt sich unterschiedlich ausführen. Es kann aus Drahtgewebe, aus Maschengestrick, aus Streckmetall bestehen. Eine Alternative hierzu ist ein Gitter, welches durch übereinanderliegende, quer zueinander verlaufende Drahtabschnitte gebildet ist. Diese Drahtabschnitte sind beispielsweise in zwei Ebenen verlaufend ausgeführt, wobei pro Ebene parallel verlaufende Drahtabschnitte vorhanden sind und die Drahtabschnitte der Ebenen verglichen miteinander rechtwinklig zueinander ausgerichtet sind, so dass sich in Axialrichtung gesehen ein Gitter ergibt.

Der zumindest eine Zentrierfortsatz kann eine geschlossen umlaufende Wand sein. Diese Wand geht einstückig in den Filterboden über. Beispielsweise wird die Wand durch plastisches Umformen einer Scheibe aus Drahtgewebe oder Maschengestrick oder Streckmetall oder dem vorgenannten Gitter erzeugt. Alternativ hierzu sind mehrere Zentrierfortsätze vorgesehen. Diese bestehen durch gegenüber dem Boden abgewinkelte Drahtabschnitte. Somit stehen einzelne Drahtabschnitte axial gegenüber dem Filterboden vor, womit sie dem Abbrandgas minimalen Strömungswiderstand entgegensetzen.

Die Endkappe kann seitlich nach außen durch den Umfangsrand begrenzt sein, das heißt, keine abstehenden Lappen besitzen. Mit diesem Umfangsrand ist sie dann über den zumindest einen Zentrierfortsatz seitlich in dem Filterelement zentriert. Das bedeutet, die Endkappe ragt in das Filterelement hinein, um zentriert zu sein. Der Zentrierfortsatz des Filterelements dient somit nicht nur der Zentrierung des Filterelements selbst, sondern zugleich auch als seitlicher Anschlag und damit als Zentriermittel für die Endkappe.

Die Endkappe ist vorzugsweise nicht durchströmbar, also ein Teil ohne Durchströmöffnungen.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Figur 1 eine Ausführungsform des erfindungsgemäßen Gasgenerators, die nicht einschränkend zu verstehen ist,
Figur 2 eine erste Variante des bei der Erfindung eingesetzten Filterelements,
Figur 3 eine zweite Variante des bei der Erfindung eingesetzten Filterelements,
Figur 4 eine dritte Variante des bei der Erfindung eingesetzten Filterelements, und
Figur 5 eine vierte Variante des bei der Erfindung eingesetzten Filterelements.

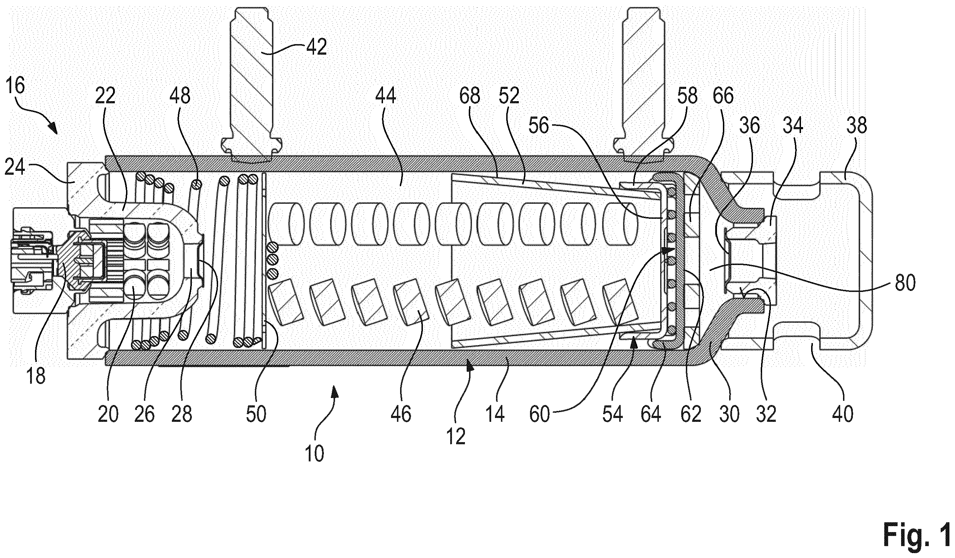

In Figur 1 ist ein Gasgenerator 10, hier in Form eines Rohrgasgenerators, dargestellt, der ein langgestrecktes Gehäuse 12 in Form eines kreiszylindrischen Rohres hat. Das Gehäuse 12 wird durch eine Gehäusewand 14 definiert.

An einem axialen Ende des Gehäuses 12 wird dieses durch eine Anzündeinheit 16 verschlossen, in der ein Anzünder 18 und eine Verstärkerladung 20 untergebracht sind.

Die Anzündeinheit 16 hat ein einstückiges, topfförmiges Gehäuse 22 mit einem abstehenden Flansch 24, welcher an einem anzünderseitigen Ende des Gehäuses 12, insbesondere durch Schweißen, befestigt ist. Eine zentrische Einströmöffnung 26 des Gehäuses 22 ist durch eine Berstmembrane 28 geschlossen.

Das entgegengesetzte Ende des Gehäuses 12 hat einen durch eine Verjüngung gebildeten Absatz 30. Eine zentrische Öffnung 32 wird durch einen Membranhalter 34 geschlossen, der eine Berstmembrane 36 trägt.

Der Membranhalter 34 wird von einem Diffusor 38 umgeben, der am Umfang gleichmäßig verteilte Ausströmöffnungen 40 besitzt.

Außenseitig am Gehäuse 12 befestigte Bolzen 42 dienen der Befestigung des Gasgenerators 10 im Fahrzeug.

Im Inneren des Gehäuses 12 ist eine Brennkammer 44 ausgebildet, in der Treibstoff in Form von Treibstoffpellets 46 untergebracht ist. Diese Treibstofffüllung ist mechanisch vorgespannt durch eine Vorspannvorrichtung mit einer doppelkegelförmigen Schraubenfeder 48, die gegen eine mit Öffnungen versehene, axial im Gehäuse 12 verschiebbare Scheibe 50 drückt, an welcher wiederum die Treibstoffpellets 46 anliegen.

Die Schraubenfeder 48 ist an ihrem anzünderseitigen Ende durch eine radiale Presspassung im Gehäuse 12 axial gehaltert, das heißt, sie ist beabstandet von dem Flansch 24.

Wie in Figur 1 zu sehen ist, ragt die Anzündeinheit 16 in die Schraubenfeder 48 hinein.

Am diffusorseitigen Ende der Brennkammer 44 ist diese unter anderem durch ein Brennkammersieb 52 begrenzt. Dieses Brennkammersieb 52, welches ebenfalls axial ausgerichtet ist und zentriert im Inneren des Gehäuses 12 angeordnet ist, hat ein anzünderseitiges, im Querschnitt größeres Ende und ein diffusorseitiges, im Querschnitt kleineres Ende. Somit läuft das Brennkammersieb 52 zum diffusorseitigen Ende zu, das heißt, es verjüngt sich, wobei die Verjüngung vorzugsweise konisch verläuft.

Das Brennkammersieb 52 wird insbesondere durch ein Lochblech gebildet.

An seinen beiden axialen Enden ist das Brennkammersieb 52 offen, zum Diffusor wird es jedoch durch eine unmittelbar daran angrenzende Endkappe 54 verschlossen. Die Endkappe 54 hat einen Boden 56 und eine vom Boden in Richtung zum anzünderseitigen Ende abstehenden Umfangsrand 58.

Der Umfangsrand 58 definiert das äußere Ende der Endkappe 54, das heißt, es stehen keine Lappen oder Laschen radial nach außen ab. Der Umfangsrand 58 ist radial von der Innenseite des Gehäuses 12 beabstandet, und zwar auf dem gesamten Umfang.

Auf der Innenseite des Umfangsrandes 58 liegt jedoch das Brennkammersieb 52 an. Diese beiden Teile müssen nicht miteinander verschweißt, verlötet oder anderweitig aneinander befestigt sein. Sie können, optional, lose aneinander anliegen, das heißt, das Brennkammersieb 52 liegt am Boden 56 an, könnte aber außerhalb des Gasgenerators 10 aus der Endkappe 54 einfach herausgezogen werden, ohne Deformation eines der Teile.

Alternativ hierzu ist der Umfangsrand 58 etwas nach innen gebogen und wird gegen das Brennkammersieb 52 gepresst.

Die Endkappe 54 ist aus Blech und weist keine Durchströmöffnungen auf.

Axial schließt sich an die Endkappe 54 ein topfförmiges Filterelement 60 an, mit einem Filterboden 62, von dem randseitig ein oder mehrere Zentrierfortsätze 64 abstehen.

Ein Stützteil 66 mit mehreren Durchströmöffnungen liegt am Absatz 30 an und stützt das an ihm anliegende Filterelement 60 sowie die am Filterelement wiederum anliegende Endkappe 54 in axialer Richtung beim Ausströmen von Gas.

Das Stützteil 66 ist vorzugsweise ein Blech, dessen Biegesteifigkeit größer ist als die der Endkappe 54 und des Filterelements 60.

Über das oder die Zentrierfortsätze 64 wird das Filterelement 60 seitlich im Gehäuse 12 zentriert. Die Zentrierfortsätze 64 oder der Zentrierfortsatz erstreckt sich seitlich am Boden 56 der Endkappe 54 entlang und abschnittsweise seitlich des Umfangsrandes 58. Damit wiederum wird die Endkappe 54 im Filterelement 60 seitlich zentriert.

Beim Aktivieren des Gasgenerators 10 wird der Anzünder 18 stromversorgt und zündet die Verstärkerladung 22, so dass die Membrane 28 aufreißt und heißes Gas und heiße Partikel in die Brennkammer 44 strömen. Dort entzünden sie die Treibstoffpellets 46. Gas, Abbrand und Schlacke strömen in das Innere des Brennkammersiebs 52. Weil dessen diffusorseitiges Ende nahe der Innenseite des Gehäuses 12 liegt oder mit ihm abschließt, gelangen im Wesentlichen das ganze Gas, Abbrand und Schlacke in das Brennkammersieb 52. Gefiltertes Abbrandgas erreicht dann einen Ringraum 68 zwischen der Innenseite des Gehäuses 12 und der Außenseite der Brennkammer 44. Dieser Ringraum 68 nimmt im Querschnitt zum diffusorseitigen Ende hin zu, was dahingehend vorteilhaft ist, weil in diesem Bereich auch zunehmend Gas in den Ringraum 68 gelangt.

Das Abbrandgas gelangt schließlich über den Ringraum 68 in das Filterelement 60, wo Schlacke abgelagert wird. Das gefilterte Abbrandgas strömt in eine zwischen dem Stützteil 66 und der Verjüngung des Gehäuses begrenzte Zwischenkammer 80 und dann durch die von der Berstmembrane 36 zuvor noch verschlossenen Öffnung in den Diffusor 38, den es über die Ausströmöffnungen 40 verlässt.

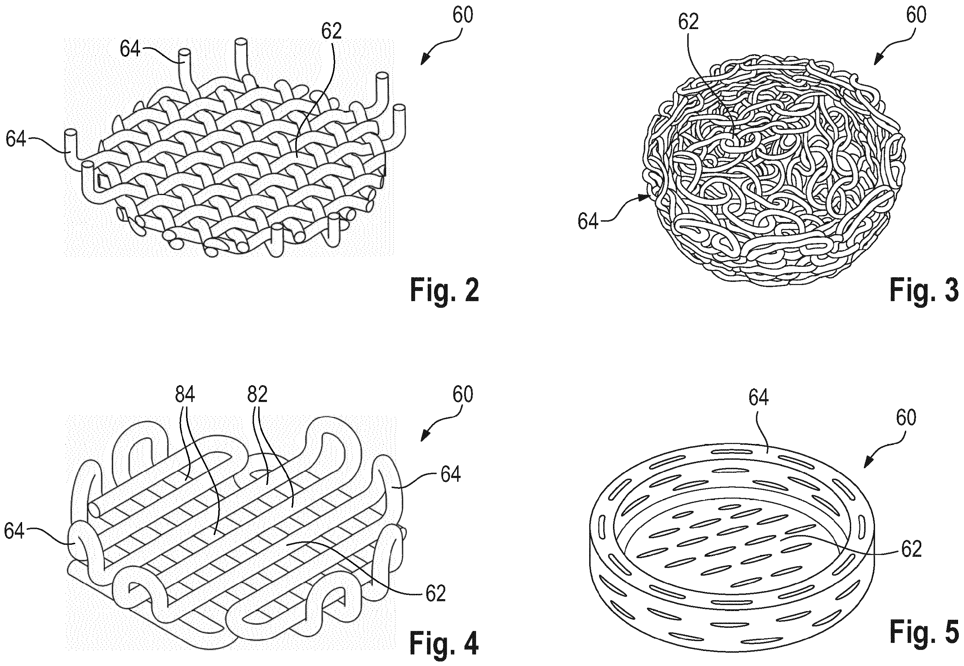

Figur 2 zeigt eine Ausführungsform des Filterbodens 62, welcher hier aus Drahtgewebe besteht. Einige Drahtfäden sind dabei randseitig des Filterbodens 62 axial abgewinkelt, und enden frei. Diese Enden der Drähte bilden Zentrierfortsätze 64.

Figur 3 hingegen zeigt ein Filterelement 60, welches aus einem Maschengestrick besteht. Dieses Maschengestrick kann seine leicht topfförmige Gestalt zum Beispiel durch Umformen des Randes einer zuvor hergestellten Scheibe erhalten haben. Alternativ wird der einen Umfangsrand und damit den Zentrierfortsatz 64 definierende, axial abstehende Rand beim Herstellen des Gestricks gebildet.

Figur 4 wiederum zeigt ein Filterelement 60, welches vorzugsweise aus einem einzigen Drahtstück hergestellt ist, bei dem der Draht in zwei Ebenen jeweils serpentinenförmig gebogen verläuft und parallele Drahtabschnitte 82 auf einer oberen Ebene und Drahtabschnitte 84 auf einer unteren Ebene besitzt, welche dann rechtwinklig zueinander verlaufen, mit Blick in axialer Richtung. Das Filterelement 60 kann aber auch aus mehreren, vorzugsweise zwei, einzelnen Drahtstücken gebildet sein, wobei die Drahtstücke dann untereinander entsprechend verbunden, insbesondere verschweißt, sein können.

Am Rand dieses Gitters sind die U-förmigen Enden der benachbarten Drahtabschnitte in Axialrichtung abgewinkelt unter Bildung der Zentrierfortsätze 64.

Schließlich zeigt Figur 5 ein Filterelement 60 aus einem plastisch umgeformten Streckmetall mit einem geschlossen umlaufenden (nur durch die Schlitze des Streckmetalls unterbrochenen) Zentrierfortsatz 64.

## Patentansprüche

1. Gasgenerator (10), umfassend
ein Gehäuse (12),
eine Anzündeinheit (16) mit einem Anzünder (18),
eine mit pyrotechnischem Treibstoff gefüllte Brennkammer (44),
einen der Brennkammer (44) nachgelagerten Diffusor (38) mit zumindest einer Ausströmöffnung (40),
ein in der Brennkammer (44) an deren diffusorseitigem Ende vorgesehenes Brennkammersieb (52), welches ein diffusorseitiges Ende und ein anzünderseitiges, axial entgegengesetztes Ende hat und vom anzünderseitigen Ende aus zum diffusorseitigen Ende verjüngend, insbesondere konisch, zuläuft, wobei die zwei axial entgegengesetzte Enden offen sind, wobei das diffusorseitige Ende des Brennkammersiebs (52) seitlich von einer Gehäusewand (14) unter Bildung eines insbesondere treibstofffreien Ringraums (68) beabstandet ist,
eine sich stirnseitig an das diffusorseitige Ende des Brennkammersiebs (52) anschließende und das diffusorseitige Ende des Brennkammersiebs (52) schließende Endkappe (54), welche einen Boden (56) und einen vom Boden (56) axial abstehenden Umfangsrand (58) hat, welcher außenseitig des diffusorseitigen Endes des Brennkammersiebs (52) angeordnet ist, ein topfförmiges Filterelement (60) mit einem Filterboden (62) und mindestens einem randseitig des Filterbodens (62) axial abstehenden Zentrierfortsatz (64), mit dem das Filterelement (60) in dem Gehäuse (12) zentriert ist.

2. Gasgenerator (10) nach Anspruch 1, **dadurch gekennzeichnet, dass** ein Stützteil (66), an welchem der Filterboden (62) anliegt und welches das Filterelement (60), die Endkappe (54) und das Brennkammersieb (52) in Ausströmrichtung abstützt.

3. Gasgenerator (10) nach Anspruch 1 oder 2, **dadurch gekennzeichnet, dass** das Gehäuse (12) zum Diffusor (38) hin einen Absatz (30) hat, insbesondere in Form einer Verjüngung, an dem das Stützteil (66) anliegt.

4. Gasgenerator (10) nach einem der vorhergehenden Ansprüche 2 bis 3, **dadurch gekennzeichnet, dass** zwischen dem Stützteil (66) und der Verjüngung eine Zwischenkammer (80) gebildet ist.

5. Gasgenerator (10) nach einem der vorhergehenden Ansprüche 2 bis 4, **dadurch gekennzeichnet, dass** das Stützteil (66) eine mit Durchströmöffnungen versehene Scheibe ist, deren Biegesteifigkeit größer ist als die der Endkappe (54) und des Filterelements (60).

6. Gasgenerator (10) nach einem der vorhergehenden Ansprüche 2 bis 5, **dadurch gekennzeichnet, dass** das Gehäuse (12) durch eine axial von dem Stützteil (66) beabstandete Berstmembrane (36) geschlossen ist.

7. Gasgenerator (10) nach einem der vorhergehenden Ansprüche 2 bis 6, **dadurch gekennzeichnet, dass** das Stützteil (66) seitlich an dem Gehäuse (12) anliegt, um im Gehäuse (12) zentriert zu sein.

8. Gasgenerator (10) nach einem der vorhergehenden Ansprüche, **dadurch gekennzeichnet, dass** in der Brennkammer (44) Treibstoffpellets (46) angeordnet sind sowie eine mechanische Vorspannvorrichtung, die die Treibstoffpellets (46) in Richtung Diffusor (38) vorspannt.

9. Gasgenerator (10) nach Anspruch 8, **dadurch gekennzeichnet, dass** die Vorspannvorrichtung eine sich quer zur Längserstreckung der Brennkammer (44) erstreckende, in der Brennkammer (44) verschiebliche Scheibe (50) sowie eine die Scheibe (50) vorspannende Schraubenfeder (48) umfasst.

10. Gasgenerator (10) nach Anspruch 9, **dadurch gekennzeichnet, dass** die Schraubenfeder (48) eine Doppelkegelform mit einem verjüngten Mittelabschnitt hat.

11. Gasgenerator (10) nach Anspruch 9 oder 10, **dadurch gekennzeichnet, dass** die Schraubenfeder (48) axial beabstandet vom anzünderseitigen Ende des Gehäuses (12) ist und axial durch eine radiale Presspassung am Gehäuse (12) gehaltert ist und/oder, dass die Anzündeinheit (16) axial in die Schraubenfeder (48) hineinragt.

12. Gasgenerator (10) nach einem der vorhergehenden Ansprüche, **dadurch gekennzeichnet, dass** der Gasgenerator (10) ein Rohrgasgenerator ist, mit einem zylindrischen, langgestreckten Gehäuse (12), an dessen einem axialen Ende die Anzündeinheit (16) vorgesehen ist und am entgegengesetzten Ende der Diffusor (38).

13. Gasgenerator (10) nach einem der vorhergehenden Ansprüche, **dadurch gekennzeichnet, dass** das Filterelement (60) aus einem Drahtgewebe, Maschengestrick, Streckmetall oder einem durch übereinanderliegende, quer zueinander verlaufende Drahtabschnitte (82, 84) gebildeten Gitter besteht.

14. Gasgenerator (10) nach Anspruch 13, **dadurch gekennzeichnet, dass** der Zentrierfortsatz (64) eine geschlossen umlaufende Wand ist, die einstückig in den Filterboden (62) übergeht, oder dass mehrere Zentrierfortsätze (64) vorgesehen sind, die durch gegenüber dem Filterboden (62) abgewinkelte Drahtabschnitte gebildet sind.

15. Gasgenerator (10) nach Anspruch 14, **dadurch gekennzeichnet, dass** die abgewinkelten Drahtabschnitte Drahtenden oder U-förmige Drahtabschnitte zwischen parallel verlaufenden Drahtabschnitten (82, 84) sind.

16. Gasgenerator (10) nach einem der vorhergehenden Ansprüche, **dadurch gekennzeichnet, dass** die Endkappe (54) seitlich nach außen durch den Umfangsrand (58) begrenzt ist und mit dem Umfangsrand (58) über den zumindest einen Zentrierfortsatz (64) seitlich in dem Filterelement (60) zentriert ist.
